(19) Europäisches Patentamt
European Patent Office
Office européen des brevets

(11) **EP 3 961 149 A1**

(12) # EUROPEAN PATENT APPLICATION
published in accordance with Art. 153(4) EPC

(43) Date of publication:
**02.03.2022 Bulletin 2022/09**

(21) Application number: **20796398.4**

(22) Date of filing: **31.03.2020**

(51) International Patent Classification (IPC):
**G01B 11/00** (2006.01)     **G01B 11/26** (2006.01)
**G06T 7/73** (2017.01)

(52) Cooperative Patent Classification (CPC):
**G01B 11/00; G01B 11/26; G06T 7/73**

(86) International application number:
**PCT/JP2020/014781**

(87) International publication number:
**WO 2020/217878 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2019 JP 2019085168**

(71) Applicant: **OMRON Corporation
Shiokoji-dori, Shimogyo-Ku
Kyoto-shi
Kyoto 600-8530 (JP)**

(72) Inventor: **TANIYASU, Yuki
Kyoto-shi, Kyoto 600-8530 (JP)**

(74) Representative: **Mewburn Ellis LLP
Aurora Building
Counterslip
Bristol BS1 6BX (GB)**

(54) **DEVICE, METHOD, AND PROGRAM FOR DETECTING POSITION AND ORIENTATION OF OBJECT**

(57)     An image processing device includes a feature region detection unit, a selection unit, and a position and orientation determination unit. The feature region detection unit detects a feature region from a two-dimensional image obtained by imaging a workpiece, the feature region being included in a single surface element constituting a surface of the workpiece. The selection unit selects data of at least three points from three-dimensional point cloud data obtained by three-dimensionally measuring the workpiece, the data of the at least three points being associated with the feature region. The position and orientation determination unit determines position and orientation information by using the data of the at least three points and prior information regarding a shape of the surface element, the position and orientation information being related to a position and an orientation of the surface element. As a result, the position and the orientation of the target object can be detected at high speed.

FIG.4

EP 3 961 149 A1

**Description**

TECHNICAL FIELD

The present disclosure relates to a device, a method, and a program for detecting a position and an orientation of a target object.

BACKGROUND ART

Conventionally, for positioning a robot that picks a target object, a technique for detecting a position and an orientation of the target object based on three-dimensional point cloud data obtained by imaging the target object is known.

For example, Japanese Patent Laying-Open No. 2017-42897 (PTL 1) discloses a robot control device that detects a scene feature point from a scene point cloud that is a three-dimensional point cloud of a target object, and calculates a position and an orientation of the target object using the detected scene feature point. The robot control device generates region information indicating a region associated with a feature amount, and detects a scene feature point from a part of the scene point cloud included in a region associated with a feature amount of a first point of the scene point cloud based on the generated region information.

CITATION LIST

PATENT LITERATURE

PTL 1: Japanese Patent Laying-Open No. 2017-42897

SUMMARY OF INVENTION

TECHNICAL PROBLEM

According to the technique described in PTL 1, since the scene feature point is detected from a part of the scene point cloud, the time required to detect the scene feature point from the scene point cloud is shortened as compared with the case where the scene feature point is detected from an entire scene point cloud. However, the part of the scene point cloud is determined based on the region information indicating the region associated with the feature amount. The region information is generated based on model feature points detected from a three-dimensional model point cloud indicating a three-dimensional model of the target object. Therefore, it takes time to generate region information, and it is not sufficient to speed up detection of a position and an orientation of a target object.

The present disclosure has been made in view of the above problems, and an object of the present disclosure is to provide a device, a method, and a program for detecting a position and an orientation of a target object at high speed.

SOLUTION TO PROBLEM

According to an example of the present disclosure, a device for detecting a position and an orientation of a target object includes a detection unit, a selection unit, and a position and orientation determination unit. The detection unit detects a feature region from a two-dimensional image obtained by imaging a target object, the feature region being included in a single surface element constituting a surface of the target object. The selection unit selects data of at least three points associated with the feature region from three-dimensional point cloud data obtained by three-dimensionally measuring the target object. The position and orientation determination unit determines position and orientation information by using the data of the at least three points and prior information regarding a shape of the surface element, the position and orientation information being related to a position and an orientation of the surface element.

According to this disclosure, the detection of the feature region from the two-dimensional image is performed by template matching using a two-dimensional template, for example. The number of templates to be prepared for two-dimensional template matching is smaller than the number of templates to be prepared for three-dimensional template matching. Therefore, processing time required for matching can be suppressed.

Further, the position and the orientation of the surface element that specifies a position and an orientation of a workpiece W are determined based on at least three points selected from the three-dimensional point cloud data. The at least three points are points associated with the feature region detected from the two-dimensional image. Therefore, time required to select the data of the at least three points from the three-dimensional point cloud data is short. From the above, the position and the orientation of the target object can be detected at high speed.

In the above disclosure, the data of the at least three points includes data of at least one first point, a relative position of the at least one first point with respect to the feature region satisfying a predetermined condition. According to this disclosure, the at least one first point whose relative position with respect to the feature region satisfies a predetermined condition can be used to specify the position of the surface element.

In the above disclosure, the predetermined condition is a condition that defines a distance between a point obtained by projecting the at least one first point on the feature region and a representative point representing a position of the feature region. According to this disclosure, the at least one first point can be used to specify the position of the surface element.

In the above disclosure, the predetermined condition is a condition that defines an angle between a straight line passing through the point obtained by projecting the at least one first point on the feature region and the representative point, and a representative direction representing an orientation of the feature region. According to this disclosure, a point can be selected from the three-dimensional point cloud data in consideration of the orientation of the feature region.

In the above disclosure, the data of the at least three points includes data of at least one second point in addition to the data of the at least one first point. A distance between the at least one second point and the at least one first point is within a defined range. According to this disclosure, the second point can be easily selected from the three-dimensional point cloud data based on the at least one first point whose relative position with respect to the feature region satisfies the predetermined condition.

In the above disclosure, the data of the at least three points is data of points belonging to the feature region when each of the points expressed by the three-dimensional point cloud data is projected on the two-dimensional image. According to this disclosure, it is possible to easily select data of a point included in the surface element from the three-dimensional point cloud data.

In the above disclosure, the detection unit detects the feature region using at least one of a feature portion existing in the surface element and a contour of the surface element in the two-dimensional image. According to this disclosure, the detection unit can easily detect the feature region using a known technique such as template matching.

In the above disclosure, the surface element is a flat surface or a curved surface having a constant curvature. According to this disclosure, the surface element is represented by an equation in a three-dimensional space. Therefore, the position and orientation determination unit can determine the position and the orientation of the surface element by obtaining a coefficient included in the equation.

In the above disclosure, the device further includes an imaging unit configured to image the target object, and an irradiation unit configured to irradiate the target object with predetermined pattern light. The two-dimensional image is obtained by imaging by the imaging unit in a state where the pattern light is not emitted. The three-dimensional point cloud data is generated from an image obtained by imaging by the imaging unit in a state where the pattern light is emitted.

According to this disclosure, x and y coordinate values of an arbitrary one point in the two-dimensional image in a visual field area of the imaging unit respectively coincide with the x and y coordinate values of the data of the one point in the three-dimensional point cloud data. Therefore, the selection unit can easily select the data of the at least three points associated with the feature region from the three-dimensional point cloud data.

In the above disclosure, the position and orientation information indicates a normal vector at one point in the surface element. According to this disclosure, the normal vector can be used to instruct an operation of the robot that picks the target object, for example.

In the above disclosure, the device further includes an action instruction generation unit configured to generate an action instruction based on the normal vector, the action instruction being for a robot that picks the target object. According to this disclosure, the robot can perform a picking operation according to the position and the orientation of workpiece W.

According to an example of the present disclosure, a method for detecting a position and an orientation of a target object includes first to third steps. The first step is a step of detecting a feature region from a two-dimensional image obtained by imaging a target object, the feature region being included in a single surface element constituting a surface of the target object. The second step is a step of selecting data of at least three points from three-dimensional point cloud data obtained by three-dimensionally measuring the target object, the data of the at least three points being associated with the feature region. The third step is a step of determining position and orientation information by using the data of the at least three points and prior information regarding a shape of the surface element, the position and orientation information being related to a position and an orientation of the surface element.

According to an example of the present disclosure, a program causes a computer to execute the method described above. According to these disclosures, the position and the orientation of the target object can be detected at high speed.

ADVANTAGEOUS EFFECTS OF INVENTION

According to the present disclosure, the position and the orientation of the target object can be detected at high speed.

BRIEF DESCRIPTION OF DRAWINGS

Fig. 1 is a schematic diagram illustrating an overall configuration of a control system according to an embodiment.
Fig. 2 is a view illustrating a three-dimensional image (distance image) of a workpiece W in a thin plate shape.
Fig. 3 is a schematic diagram illustrating an example of a hardware configuration of an image processing device illustrated in Fig. 1.
Fig. 4 is a block diagram illustrating an example of a functional configuration of the image processing device illustrated in Fig. 1.
Fig. 5 is a diagram illustrating a first processing example by an image processing unit.
Fig. 6 is a diagram illustrating a method for calculating a normal vector of a plane.
Fig. 7 is a diagram illustrating a second processing example by the image processing unit.
Fig. 8 is a diagram illustrating a third processing example by the image processing unit.
Fig. 9 is a diagram illustrating a fourth processing example by the image processing unit.
Fig. 10 is a diagram illustrating the fourth processing example when the workpiece is inclined.
Fig. 11 is a diagram illustrating a fifth processing example by the image processing unit.
Fig. 12 is a view illustrating an example of a feature portion on a surface element.
Fig. 13 is a flowchart illustrating a flow of processing in the control system.

DESCRIPTION OF EMBODIMENT

An embodiment of the present invention will be described in detail with reference to the drawings. The same or corresponding parts in the drawings are denoted by the same reference numerals, and the descriptions thereof will not be repeated.

§1 Application example

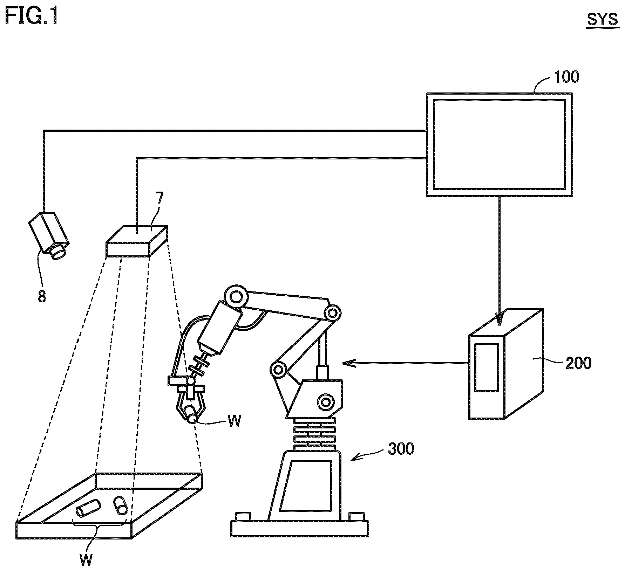

First, an example of a scene to which the present invention is applied will be described with reference to Fig. 1. Fig. 1 is a schematic diagram illustrating an overall configuration of a control system according to an embodiment. A control system SYS illustrated in Fig. 1 is incorporated in a production line or the like, and performs control to pick a workpiece W placed on a tray or the like one by one. Since workpiece W is conveyed from an upstream manufacturing device (not illustrated) or the like, a position and an orientation of workpiece W in the tray are random.

Control system SYS illustrated in Fig. 1 includes an image processing device 100, a robot controller 200, and a robot 300. An illumination device 7 and an imaging device 8 are connected to image processing device 100.

Robot 300 performs an operation of picking workpiece W. Robot 300 includes an end effector that grips workpiece W, and an articulated arm for changing a position and an orientation of the end effector according to an instruction. The operation of robot 300 is controlled by robot controller 200.

Upon receiving an action instruction from image processing device 100, robot controller 200 moves the articulated arm of robot 300 and causes robot 300 to pick workpiece W.

Illumination device 7 functions as a kind of surface light source, and can emit illumination light of arbitrary grayscale patterns according to an instruction from image processing device 100. The arbitrary grayscale patterns include a pattern in which brightness is uniform in an irradiation surface and a pattern in which the brightness periodically changes along a predetermined direction in the irradiation surface.

Illumination device 7 includes, as main components, a light source such as a light emitting diode (LED) or a halogen lamp, and a filter disposed on a side of the irradiation surface of illumination device 7. Further, the filter generates grayscale patterns required for measurement of a three-dimensional shape as described later, and can arbitrarily change in-plane light transmittance in accordance with a command from image processing device 100.

Imaging device 8 is installed so that workpiece W on the tray is included in the visual field area, and images light obtained by illumination light emitted by illumination device 7 reflecting on the surface of workpiece W. Imaging device 8 outputs an image obtained by imaging to image processing device 100.

Imaging device 8 includes, as main components, an optical system such as a lens, and a pickup device such as a coupled charged device (CCD) or a complementary metal oxide semiconductor (CMOS) sensor.

Image processing device 100 detects the position and the orientation of workpiece W present in the visual field of imaging device 8 based on the image received from imaging device 8. Based on the position and the orientation of workpiece W that are detected, image processing device 100 calculates the position and the orientation of the end effector to be assumed in order to pick workpiece W, and generates an action instruction to move to the position and orientation that are calculated. Image processing device 100 outputs the generated action instruction to robot controller 200.

Specifically, image processing device 100 three-dimensionally measures the visual field area of imaging device 8 based on the image captured by imaging device 8 in a state where illumination device 7 emits the illumination light of the grayscale patterns. By the three-dimensional measurement, three-dimensional point cloud data indicating three-dimensional coordinate values of a plurality of points on a surface facing imaging device 8 in objects (including workpiece W) existing in the visual field area is generated.

As a method for detecting the position and the orientation of workpiece W from the three-dimensional point cloud data, a search processing method for preparing templates indicating three-dimensional shapes respectively in different orientations of workpiece W viewed from various viewpoints, and performing matching of these templates with respect to the three-dimensional point cloud data is conceivable. The template is generated from 3D-CAD data indicating the three-dimensional shape of workpiece W.

However, in the above search processing method, a large number of templates to be prepared is required as compared to two-dimensional template matching, and processing time for matching is increased.

Furthermore, in the search processing method described above, detection accuracy of the position and the orientation of workpiece W decreases in the case where workpiece W is in a shape with few three-dimensional features (for example, a thin plate).

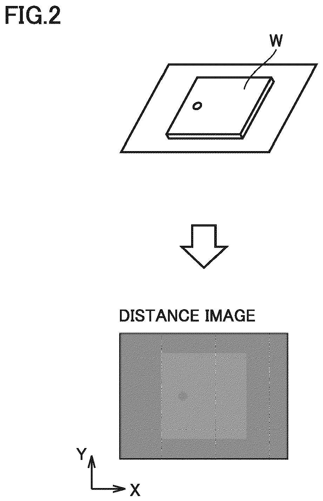

Fig. 2 is a view illustrating a three-dimensional image (distance image) of workpiece W in a thin plate shape. On an upper part of Fig. 2, a perspective view of workpiece W in a thin plate shape is illustrated, and on a lower part, a distance image of workpiece W of the upper part is illustrated. The distance image is an image in which information corresponding to a distance from imaging device 8 to a subject surface is reflected as a value of each pixel of imaging device 8, and is generated from the three-dimensional point cloud data. As illustrated in Fig. 2, in the case of workpiece W in a thin plate shape, change in pixel values at a boundary between workpiece W and a background object becomes small. Therefore, in the above search processing method, the detection accuracy of the position and the orientation of workpiece W decreases.

In order to suppress an increase in the detection time and a decrease in the detection accuracy, image processing device 100 according to the present embodiment detects the position and the orientation of workpiece W using the two-dimensional image in addition to the three-dimensional point cloud data. The two-dimensional image is obtained by imaging by imaging device 8 in a state where illumination light of a grayscale pattern is not irradiated.

Image processing device 100 detects a feature region from a two-dimensional image, the feature region being included in a single surface element constituting a surface of workpiece W. Image processing device 100 selects, from the three-dimensional point cloud data, data of at least three points associated with the feature region that has been detected. Image processing device 100 determines position and orientation information by using the data of the at least three points that has been selected and prior information regarding a shape of the surface element, the position and orientation information being related to a position and an orientation of the surface element. The position and the orientation of workpiece W are specified by the position and the orientation of the surface element of workpiece W.

The detection of the feature region from the two-dimensional image is performed by template matching using a two-dimensional template, for example. A plurality of templates are prepared in advance for each orientation of the surface element of workpiece W viewed from various viewpoints. However, the number of templates to be prepared for the two-dimensional template matching is smaller than the number of templates to be prepared for the three-dimensional template matching. Therefore, processing time required for matching can be suppressed.

Further, the position and the orientation of the surface element that specifies a position and an orientation of a workpiece W are determined based on at least three points selected from the three-dimensional point cloud data. The at least three points are points associated with the feature region detected from the two-dimensional image. Therefore, time required to select the data of the at least three points from the three-dimensional point cloud data is short.

For the detection of the feature region from the two-dimensional image, a pattern formed on the surface element corresponding to the feature region, an edge that is a boundary between the surface element and a periphery of the surface element, and the like can be used. Therefore, even if workpiece W is in a shape with few three-dimensional features (for example, a thin plate), the feature region can be accurately detected from the two-dimensional image. As a result, a decrease in the detection accuracy of the position and the orientation of workpiece W can be suppressed.

As described above, according to the image processing device of the present embodiment, it is possible to suppress an increase in detection time of the position and the orientation of workpiece W. Furthermore, even for workpiece W having a shape with few three-dimensional features (for example, a thin plate), it is possible to suppress a decrease in the detection accuracy of the position and the orientation of workpiece W.

§2 Specific examples

Next, specific examples of the control system according to the present embodiment will be described.

<A. Hardware configuration example of image processing device>

Image processing device 100 is typically a computer having a general-purpose architecture, and executes image processing according to the present embodiment by executing a program (instruction codes) installed in advance. Typically, such a program is distributed in a state of being stored in various recording media and the like, or is installed in image processing device 100 via a network or the like.

When such a general-purpose computer is used, an operating system (OS) for executing basic processing of the computer may be installed in addition to an application for executing the image processing according to the present embodiment. In this case, the program according to the present embodiment may call a necessary module, among program modules provided as a part of the OS, in a predetermined array at a predetermined timing to execute processing. That is, the program itself according to the present embodiment does not need to include a module as described above, and the processing may be executed in cooperation with the OS. The program according to the present embodiment may be in a form not including a part of such modules.

Furthermore, the program according to the present embodiment may be provided by being incorporated in a part of another program. Also in this case, the program itself does not include the module included in the other program combined as described above, and the processing is executed in cooperation with the another program. That is, the program according to the present embodiment may be incorporated in such another program. Note that a part or all of the functions provided by execution of the program may be implemented as a dedicated hardware circuit.

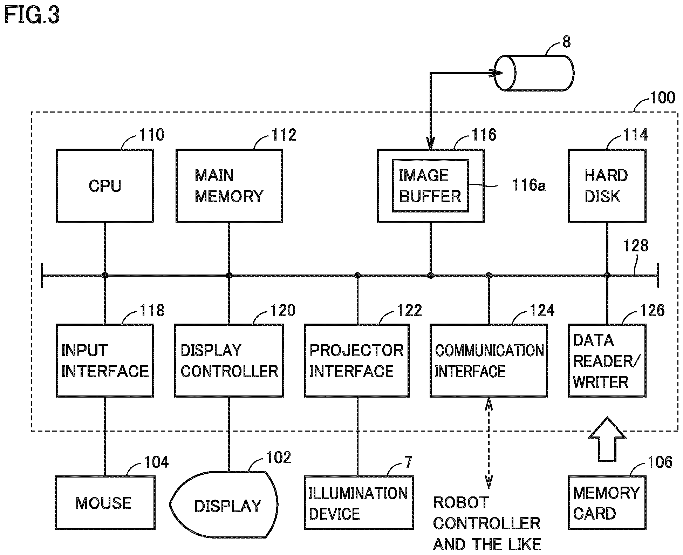

Fig. 3 is a schematic diagram illustrating an example of a hardware configuration of the image processing device illustrated in Fig. 1. As illustrated in Fig. 3, image processing device 100 includes a central processing unit (CPU) 110 as an arithmetic processing unit, a main memory 112 and a hard disk 114 as storage units, a camera interface 116, an input interface 118, a display controller 120, a projector interface 122, a communication interface 124, and a data reader/writer 126. These units are data-communicably connected to each other via a bus 128.

CPU 110 expands a program (code) installed in hard disk 114 into main memory 112, and executes the program in a predetermined order to perform various operations. Main memory 112 is typically a volatile storage device such as a dynamic random access memory (DRAM), and holds an image acquired by imaging device 8, calibration data, information regarding a measurement result, and the like in addition to the program read from hard disk 114. Further, various setting values and the like may be stored in hard disk 114. Note that a semiconductor storage device such as a flash memory may be adopted in addition to hard disk 114 or instead of hard disk 114.

Camera interface 116 mediates data transmission between CPU 110 and imaging device 8. That is, camera interface 116 is connected to imaging device 8. Camera interface 116 includes an image buffer 116a for temporarily accumulating images from imaging device 8. Then, when images of a predetermined number of frames are accumulated in image buffer 116a, camera interface 116 transfers the accumulated images to main memory 112. Furthermore, camera interface 116 gives an imaging command to imaging device 8 according to an internal command generated by CPU 110.

Input interface 118 mediates data transmission between CPU 110 and an input unit such as a mouse 104, a touch panel, or a keyboard. That is, input interface 118 receives an operation command given by the user operating the input unit.

Display controller 120 is connected to display 102 and notifies the user of information such as a processing result in CPU 110. That is, display controller 120 controls display on display 102.

Projector interface 122 mediates data transmission between CPU 110 and illumination device 7. More specifically, projector interface 122 gives an illumination command to illumination device 7 according to an internal command generated by CPU 110.

Communication interface 124 mediates data transmission between CPU 110 and an external device such as robot controller 200. Communication interface 124 typically includes Ethernet (registered trademark), a universal serial bus (USB), or the like.

Data reader/writer 126 mediates data transmission between CPU 110 and memory card 106 as a recording medium. That is, a program to be executed by image processing device 100 and the like are distributed in memory card 106 in a stored state, and data reader/writer 126 reads the program from memory card 106. Further, in response to an internal command of CPU 110, data reader/writer 126 writes an input image acquired by imaging device 8 and/or a processing result by image processing device 100 into memory card 106. Note that memory card 106 is configured by a general-purpose semiconductor storage device such as a secure digital (SD), a magnetic storage medium such as a flexible disk, or an optical storage medium such as a compact disk read only memory (CD-ROM).

<B. Functional configuration example of image processing device>

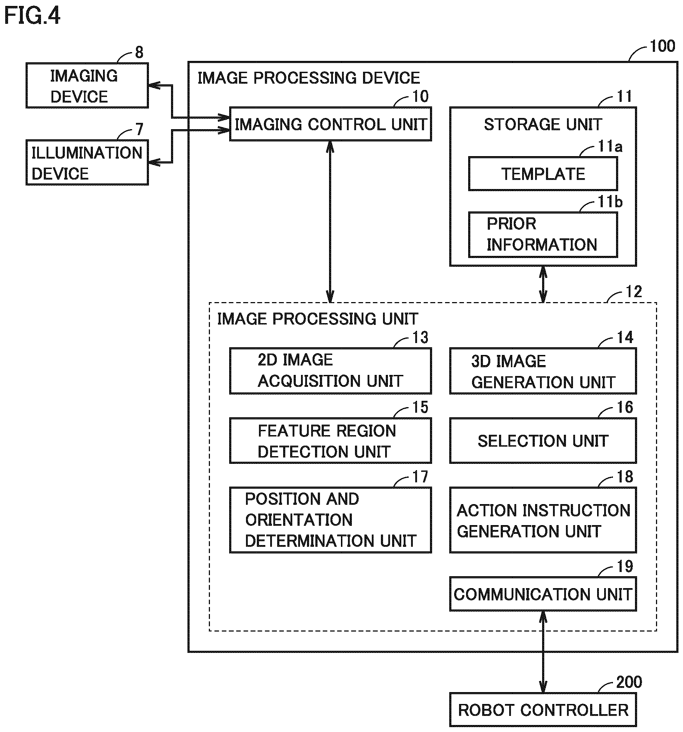

Fig. 4 is a block diagram illustrating an example of a functional configuration of the image processing device illustrated in Fig. 1. As illustrated in Fig. 4, image processing device 100 includes an imaging control unit 10, a storage unit 11, and an image processing unit 12.

Imaging control unit 10 controls operations of illumination device 7 and imaging device 8. Imaging control unit 10 controls the operations of illumination device 7 and imaging device 8 according to one of a three-dimensional imaging mode and a two-dimensional imaging mode.

In the case of the three-dimensional imaging mode, imaging control unit 10 controls illumination device 7 to emit illumination light of a grayscale pattern, and outputs an imaging instruction to imaging device 8 in a state where illumination light of a predetermined grayscale pattern (pattern light) is emitted.

In the case of the two-dimensional imaging mode, imaging control unit 10 outputs an imaging instruction to imaging device 8 in a state where no pattern light is emitted from illumination device 7. At this time, imaging control unit 10 may control illumination device 7 to the OFF state, or may control illumination device 7 so as to irradiate the visual field area of imaging device 8 with uniform light.

Storage unit 11 stores templates 11a indicating images of a single surface element constituting the surface of workpiece W viewed from different viewpoints respectively for different orientations. When workpiece W has a rectangular parallelepiped shape, the surface element is one of six planes. When workpiece W has a cylindrical shape, the surface element is one of two bottom surfaces and side surfaces. When workpiece W is spherical, the surface element is spherical. When workpiece W is a substrate, the surface element may be a surface on which electronic components are mounted.

Storage unit 11 further stores prior information 11b relating to a shape of the surface element corresponding to templates 11a. For example, when the surface element is a surface of workpiece W in a rectangular parallelepiped shape or a bottom surface of workpiece W in a cylindrical shape, prior information 11b indicates that the surface element is a flat surface. When the surface element is a side surface of workpiece W in a cylindrical shape, prior information 11b indicates that the surface element is a cylindrical side surface. When a radius of workpiece W in a cylindrical shape is known, prior information 11b may further indicate the radius. When workpiece W is in a spherical shape, prior information 11b indicates that the surface element is spherical. When a radius of workpiece W in a spherical shape is known, prior information 11b may further indicate the radius.

Image processing unit 12 performs processing on the image obtained by imaging by imaging device 8. As illustrated in Fig. 4, image processing unit 12 includes a 2D image acquisition unit 13, a 3D image generation unit 14, a feature region detection unit 15, a selection unit 16, a position and orientation determination unit 17, an action instruction generation unit 18, and a communication unit 19.

2D image acquisition unit 13 acquires a two-dimensional image captured by imaging device 8 in the two-dimensional imaging mode from imaging control unit 10.

3D image generation unit 14 performs three-dimensional measurement on the visual field area of imaging device 8 based on the image captured by imaging device 8 in the three-dimensional imaging mode, and generates three-dimensional point cloud data. The three-dimensional point cloud data indicates three-dimensional coordinates of each point on the object surface existing in the visual field area of imaging device 8.

As the three-dimensional measurement processing, a triangulation method or a coaxial method, for example, can be adopted. The triangulation method is a method in which optical axes of imaging and light are separated by a length of a base line, and parallax is converted into a distance. Examples of the triangulation method include active and passive methods. Examples of the active methods include a structured illumination method, a phase shift method, and a spatial coding method. The coaxial method is a method in which optical axes of imaging and ranging means are set to be the same. The ranging means includes a time of flight (TOF) method and a focus method. 3D image generation unit 14 may execute the three-dimensional measurement processing using any of these methods. For example, the three-dimensional measurement processing is performed using the phase shift method.

The phase shift method is a method using an image (sinusoidal projection image) captured in a state of being irradiated with illumination light having a grayscale pattern in which grayscale is changed in a sinusoidal shape in an irradiation surface. A plurality of grayscale patterns having different grayscale change periods in the irradiation surface and different phases are prepared, and illumination device 7 sequentially irradiates the visual field area of imaging device 8 with the plurality of grayscale patterns. 3D image generation unit 14 acquires images respectively captured when the plurality of grayscale patterns are irradiated as a group of sinusoidal projection images. Then, 3D image generation unit 14 calculates three-dimensional coordinates based on change in brightness (luminance or brightness) of a corresponding portion between these sinusoidal projection images.

Feature region detection unit 15 detects a feature region included in a surface element corresponding to template 11a from the two-dimensional image acquired by 2D image acquisition unit 13 using a known template matching method.

Selection unit 16 selects data of at least three points associated with the feature region from the three-dimensional point cloud data generated by 3D image generation unit 14. Both the two-dimensional image and the three-dimensional point cloud data are generated by imaging by imaging device 8. Therefore, x and y coordinate values of an arbitrary one point in the two-dimensional image in a visual field area of imaging device 8 respectively coincide with the x and y coordinate values of the data of the one point in the three-dimensional point cloud data. Therefore, selection unit 16 can easily select the data of the at least three points associated with the feature region from the three-dimensional point cloud data. The number of points selected from the three-dimensional point cloud is determined according to the shape of the surface element.

Based on the data of the at least three points selected by selection unit 16 and prior information 11b, position and orientation determination unit 17 determines the position and orientation information related to the position and the orientation of the surface element. The position and orientation information indicates, for example, a target point that is one point in the surface element and a normal vector with respect to this surface element at the target point.

Action instruction generation unit 18 generates an action instruction for robot 300 based on the position and orientation information (for example, the target point and the normal vector). For example, action instruction generation unit 18 determines the normal vector as a gripping direction, and generates an action instruction that causes the end effector to move along the normal vector toward the target point.

Communication unit 19 can communicate with robot controller 200, and transmits the action instruction generated by action instruction generation unit 18 to robot controller 200.

<C. Processing examples of image processing unit>

Next, specific processing examples of image processing unit 12 will be described.

(C-1. First processing example)

A first processing example is an example of determining the position and the orientation of the bottom surface (surface element) of workpiece W in a cylindrical shape. In this example, storage unit 11 stores templates 11a for respective orientations of the bottom surface of workpiece W viewed from various viewpoints, and prior information 11b indicating that the surface element is a circular flat surface. Templates 11a indicate positions of edge pixels serving as an outline of the bottom surface of workpiece W.

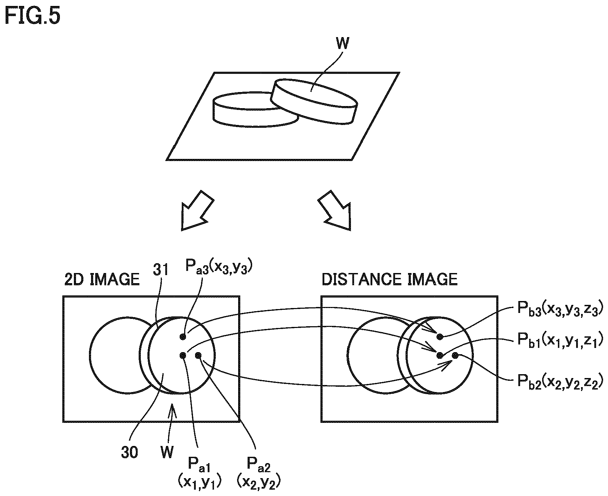

Fig. 5 is a diagram illustrating a first processing example by the image processing unit. As illustrated in Fig. 5, feature region detection unit 15 extracts edge pixels 31 in the two-dimensional image. Feature region detection unit 15 collates edge pixels 31 extracted from the two-dimensional image with templates 11a to detect an entire surface element, which is the bottom surface of workpiece W, as a feature region 30 from the two-dimensional image. As described above, feature region detection unit 15 detects the entire surface element in the two-dimensional image as a feature region using the contour of the surface element.

Selection unit 16 selects, from the three-dimensional point cloud data, data of point $P_{b1}$ whose relative position with respect to feature region 30 satisfies the following Condition (1).

Condition (1): the gravity center of the feature region coincides with the x and y coordinate values. In other words, the distance between the point obtained by projecting point $P_{b1}$ on the two-dimensional image and the gravity center of the feature region is 0.

Selection unit 16 extracts a feature point $P_{a1}$ $(x_1, y_1)$ that is the gravity center of feature region 30. Feature point $P_{a1}$ $(x_1, y_1)$ is a point representing the position of feature region 30. Selection unit 16 selects data of the point $_{b1}$ corresponding to a feature point $P_{a1}$ from the three-dimensional point cloud data. As described above, the x and y coordinate values of the point in the two-dimensional image coincide with the x and y coordinate values of the data of the point in the three-dimensional point cloud data. Therefore, selection unit 16 may select data of point $P_{b1}$ $(x_1, y_1, z_1)$ at which the x and y coordinate values coincide with the x and y coordinate values of feature point $P_{a1}$.

Further, selection unit 16 selects data of points $P_{b2}$ and $P_{b3}$ whose relative positions with respect to feature region 30 satisfy following Conditions (2) to (4) from the three-dimensional point cloud data.

Condition (2): feature points $P_{a2}$ and $P_{a3}$ obtained by projecting points $P_{b2}$ and $P_{b3}$ onto the two-dimensional image, respectively, are within the feature region.

Condition (3): the distance between feature points $P_{a2}$ and $P_{a3}$ and the gravity center of the feature region is a prescribed distance (for example, 1/2 of radius r of the bottom surface).

Condition (4): a line connecting the gravity center of the feature region and feature point $P_{a2}$, and a line connecting the gravity center of the feature region and feature point $P_{a3}$ are not parallel (typically orthogonal).

Selection unit 16 extracts feature points $P_{a2}$ $(x_2, y_2)$ and $P_{a3}$ $(x_3, y_3)$ defined by Conditions (2) to (4) from feature region 30. Then, selection unit 16 selects data of a point $P_{b2}$ $(x_2, y_2, z_2)$ whose x and y coordinate values coincide with the x and y coordinate values of feature point $P_{a2}$ from the three-dimensional point cloud data. Further, selection unit 16 selects data of a point $P_{b3}$ $(x_3, y_3, z_3)$ whose x and y coordinate values coincide with the x and y coordinate values of feature point $P_{a3}$ from the three-dimensional point cloud data.

In this manner, selection unit 16 selects the data of points $P_{b1}$, $P_{b2}$, and $P_{b3}$ respectively corresponding to feature points $P_{a1}$, $P_{a2}$, and $P_{a3}$ in feature region 30. Feature region 30 is a region of a surface element in the two-dimensional image. Therefore, points $P_{b1}$, $P_{b2}$, and $P_{b3}$ are points on the surface element.

Position and orientation determination unit 17 determines point $P_{b1}$ corresponding to feature point $P_{a1}$, which is the gravity center of feature region 30, as the center of the surface element, which is a circular plane.

Further, position and orientation determination unit 17 determines a plane including the surface element in accordance with the prior information indicating that the surface element is a plane. The equation of the plane passing through point $P_{b1}$ $(x_1, y_1, z_1)$ is expressed by a $(x - x_1) + b (y - y_1) + c (z - z_1) = 0$. Vector $(a, b, c)$ is a normal vector of a plane.

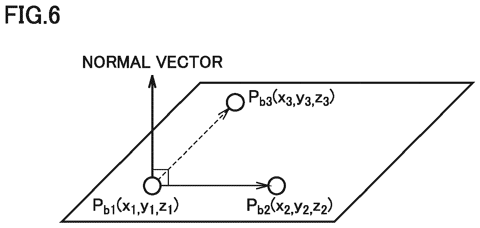

Fig. 6 is a diagram illustrating a method for calculating the normal vector of the plane. The normal vector of the plane is an outer product of two vectors along this plane. Therefore, position and orientation determination unit 17 calculates an outer product of a vector $P_{b1}P_{b2}$ directed from point $P_{b1}$ to point $P_{b2}$ and a vector $P_{b1}P_{b3}$ directed from point $P_{b1}$ to point $P_{b3}$ as a normal vector. That is, position and orientation determination unit 17 calculates coefficients a, b, and c according to the following equations.

$$a = (y_2 - y_1)(z_3 - z_1) - (y_3 - y_1)(z_2 - z_1)$$

$$b = (z_2 - z_1)(x_3 - x_1) - (z_3 - z_1)(x_2 - x_1)$$

$$c = (x_2 - x_1)(y_3 - y_1) - (x_3 - x_1)(y_2 - y_1)$$

Alternatively, selection unit 16 may select, from the three-dimensional point cloud data, data of four or more points corresponding to four or more feature points in feature region 30. Position and orientation determination unit 17 may calculate coefficients a, b, and c using the data of the four or more points selected by selection unit 16 according to the least squares method.

In this manner, position and orientation determination unit 17 generates information indicating the center of the surface element and the normal vector $(a, b, c)$ of the surface element as the position and orientation information indicating the position and the orientation of the surface element which is a circular plane having a radius r.

(C-2. Second processing example)

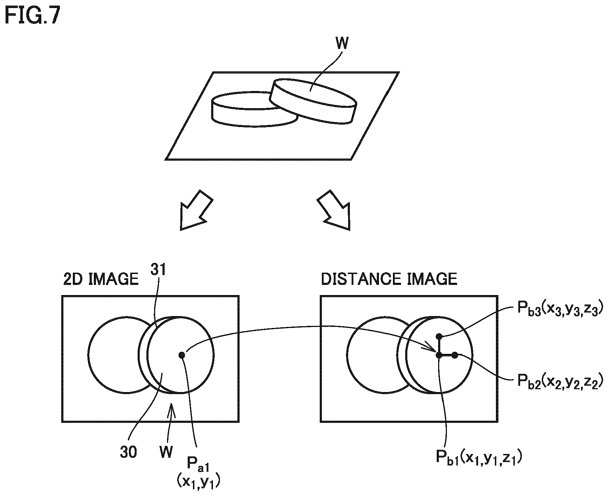

Fig. 7 is a diagram illustrating a second processing example by the image processing unit. The second processing example is different from the first processing example only in the selection processing of selection unit 16.

Similarly to the first processing example, selection unit 16 selects the data of point $P_{b1}$ satisfying Condition (1). Further, selection unit 16 selects data of points $P_{b2}$ and $P_{b3}$ satisfying following Conditions (5) and (6) instead of Conditions (2) to (4).

Condition (5): the distance from point $P_{b1}$ is within a defined range. The defined range is defined using radius r of the surface element, and is from r/2 to r, for example.

Condition (6): a line connecting point $P_{b1}$ and point $P_{b2}$ and a line connecting point $P_{b1}$ and point $P_{b3}$ are not parallel (typically orthogonal).

An entire surface element that is a circular flat surface is detected as the feature region from the two-dimensional image by feature region detection unit 15. Therefore, point $P_{b1}$ at which the gravity center of the feature region and the x and y coordinate values match is the center of the surface element. A point whose distance from point $P_{b1}$ is within radius r in the three-dimensional point cloud is a point on the surface element. Therefore, points $P_{b2}$ and $P_{b3}$ satisfying Condition (5) are points on the surface element. Furthermore, in order to satisfy Condition (6), vector $P_{b1}P_{b2}$ directed from point $P_{b1}$ to point $P_{b2}$ and vector $P_{b1}Pb_3$ directed from point $P_{b1}$ to point $P_{b3}$ are orthogonal to each other. Therefore, normal vector $(a, b, c)$ of the surface element can be calculated using vector $P_{b1}P_{b2}$ and vector $P_{b1}P_{b3}$.

(C-3. Third processing example)

A third processing example is an example of determining the position and the orientation of an upper surface (surface element) of workpiece W that is a thin plate and is in a rectangular shape in planar view. In this example, storage unit 11 stores templates 11a for respective orientations of the upper surface of workpiece W viewed from various viewpoints, and prior information 11b indicating that the surface element is a rectangular plane. Templates 11a indicate positions of edge pixels serving as an outline of the upper surface of workpiece W.

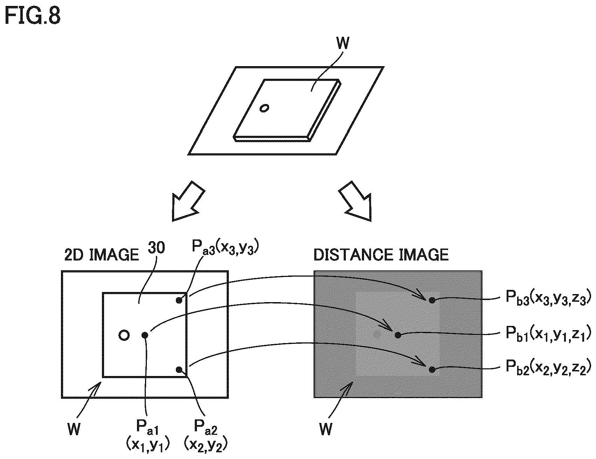

Fig. 8 is a diagram illustrating a third processing example by the image processing unit. As illustrated in Fig. 8, feature region detection unit 15 extracts edge pixels 31 in the two-dimensional image. Feature region detection unit 15 collates edge pixels 31 extracted from the two-dimensional image with templates 11a to detect an entire surface element, which is the upper surface of workpiece W, as feature region 30 from the two-dimensional image.

Similarly to the first processing example, selection unit 16 selects the data of point $P_{b1}$ satisfying Condition (1). Further, selection unit 16 selects data of points $P_{b2}$ and $P_{b3}$ whose relative positions with respect to feature region 30 satisfy following Conditions (7) and (8) from the three-dimensional point cloud data.

Condition (7): feature point $P_{a2}$ obtained by projecting point $P_{b2}$ on the two-dimensional image is located on a side of feature point $P_{a1}$ (the gravity center) by a prescribed distance (a distance sufficiently smaller than 1/2 of the length of the diagonal line of the surface element in a rectangular shape) from one corner of the feature region.

Condition (8): the point obtained by projecting point $P_{b3}$ on the two-dimensional image is located on a side of feature point $P_{a1}$ (the gravity center) by a prescribed distance (a distance sufficiently smaller than 1/2 of the length of the diagonal line of surface element in a rectangular shape) from a corner adjacent to the corner corresponding to feature point $P_{a2}$ in the feature region.

In this manner, selection unit 16 selects the data of points $P_{b1}$, $P_{b2}$, and $P_{b3}$ corresponding respectively to feature points $P_{a1}$, $P_{a2}$, and $P_{a3}$ in feature region 30. Feature region 30 is a region of a surface element in the two-dimensional image. Therefore, points $P_{b1}$, $P_{b2}$, and $P_{b3}$ are points on the surface element.

Position and orientation determination unit 17 determines point $P_{b1}$ corresponding to feature point $P_{a1}$, which is the gravity center of feature region 30, as the center of the surface element.

Further, similarly to the first processing example, position and orientation determination unit 17 determines the center of the surface element and the normal vector of the surface element, according to the prior information indicating that the surface element is a plane.

Further, position and orientation determination unit 17 determines vector $P_{b1}P_{b2}$ directed from point $P_{b1}$ to point $P_{b2}$ and vector $P_{b1}P_{b3}$ directed from point $P_{b1}$ to point $P_{b3}$ as directions of two diagonals of the surface element. The directions of the diagonals indicate the orientation of the surface element in a rectangular shape.

In this manner, position and orientation determination unit 17 generates information indicating the center of the surface element, the normal vector of the surface element, and the directions of the two diagonals, as the position and orientation information indicating the position and the orientation of the surface element which is a rectangular plane.

Note that, in a case where it is not necessary to specify the diagonal directions, selection unit 16 may perform labeling to the feature region detected from the two-dimensional image and select at least three feature points not on the same straight line from points having a label indicating that the points are within the feature region. Selection unit 16 may select data of points corresponding to at least three feature points from the three-dimensional point cloud data.

(C-4. Fourth processing example)

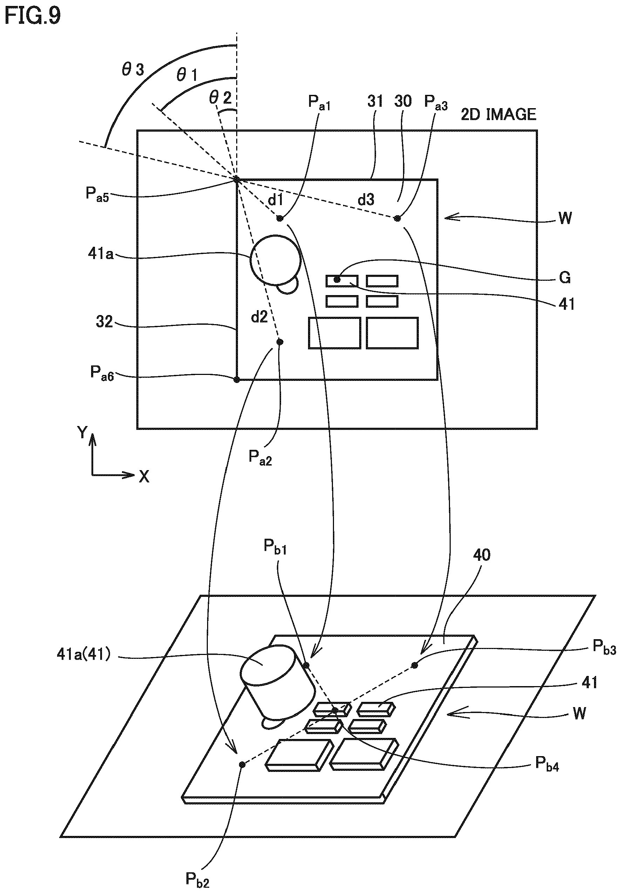

Fig. 9 is a diagram illustrating a fourth processing example by the image processing unit. As illustrated in Fig. 9, the fourth processing example is an example of determining the position and the orientation of the upper surface (surface element) of workpiece W which is a substrate and is in a rectangular shape in planar view. It is assumed that workpieces W are stacked in a tray such that upper surfaces 40 are substantially parallel to the horizontal plane.

A plurality of electronic components 41 are mounted on upper surface 40 of workpiece W. In the example illustrated in Fig. 9, the plurality of electronic components 41 include a cylindrical electronic component 41a mounted near one side of upper surface 40 of workpiece W. In the fourth processing example, storage unit 11 stores templates 11a for respective orientations of the upper surface of workpiece W viewed from various viewpoints, and prior information 11b indicating that the surface element is a rectangular plane. Templates 11a indicate positions of edge pixels serving as an outline of upper surface 40 of workpiece W and positions of edge pixels serving as an outline of each of electronic components 41 mounted on upper surface 40 of workpiece W.

As illustrated in Fig. 9, feature region detection unit 15 extracts edge pixels 31 in the two-dimensional image. Feature region detection unit 15 collates edge pixels 31 extracted from the two-dimensional image with templates 11a to detect an entire surface element, which is upper surface 40 of workpiece W, as feature region 30 from the two-dimensional image.

Template 11a indicates not only the position of the edge pixels serving as the outline of upper surface 40 of workpiece W, but also the position of the edge pixels serving as the outline of each of electronic components 41. Therefore, feature region detection unit 15 can detect the orientation of feature region 30. That is, feature region detection unit 15 detects the x and y coordinate values of feature points $P_{a5}$ and $P_{a6}$ that are both ends of a side 32 closest to electronic component 41a in a cylindrical shape among four sides constituting the outline of feature region 30. Out of the points at the both ends of side 32, a point closer to electronic component 41a is defined as a feature point $P_{a5}$, and a point farther from electronic component 41a is defined as a feature point $P_{a6}$. Side 32 indicates a representative direction representing the orientation of feature region 30.

An electronic component 41 is mounted on a gravity center G of upper surface 40 of workpiece W. Therefore, point $P_{b1}$ satisfying Condition (1) described above is not a point on upper surface 40 that is a surface element, but a point on electronic component 41. In addition, points $P_{b2}$ and $P_{b3}$ satisfying Conditions (2) to (4) described above may possibly be points on electronic component 41.

Therefore, in the fourth processing example, selection unit 16 selects data of points $P_{b1}$, $P_{b2}$, and $P_{b3}$ whose relative positions with respect to feature region 30 satisfy following Conditions (9) to (11) from the three-dimensional point cloud data.

Condition (9): feature points $P_{a1}$, $P_{a2}$, and $P_{a3}$ obtained by projecting points $P_{b1}$, $P_{b2}$, and $P_{b3}$ onto the two-dimensional image, respectively, are within the feature region.

Condition (10): distances between feature points $P_{a1}$, $P_{a2}$, and $P_{a3}$ and feature point $P_{a5}$ are prescribed distances d1, d2, and d3, respectively.

Condition (11): an angle formed by a straight line passing through feature point $P_{a5}$ and feature point $P_{a1}$ and a straight line passing through feature points $P_{a5}$ and $P_{a6}$ (a straight line including side 32) is a specified angle $\theta1$. An angle formed by a straight line passing through feature point $P_{a5}$ and feature point $P_{a2}$ and a straight line passing through feature points $P_{a5}$ and $P_{a6}$ (a straight line including side 32) is a specified angle $\theta2$. An angle formed by a straight line passing through feature point $P_{a5}$ and feature point $P_{a3}$ and a straight line passing through feature points $P_{a5}$ and $P_{a6}$ (a straight line including side 32) is a specified angle $\theta3$.

Prescribed distances d1, d2, and d3 and prescribed angles $\theta1$, $\theta2$, and $\theta3$ are determined in advance according to an arrangement of electronic components 41 so that feature points $P_{a1}$, $P_{a2}$, and $P_{a3}$ do not overlap with the positions of electronic components 41. Prescribed distances d2 and d3 and the specified angles $\theta2$ and $\theta3$ are also determined such that feature point $P_{a2}$ and feature point $P_{a3}$ are on one diagonal line of upper surface 40, and a midpoint between feature point $P_{a2}$ and feature point $P_{a3}$ coincides with the gravity center G of the feature region. In addition, prescribed distance d1 and specified angle $\theta1$ are determined such that feature point $P_{a1}$ is on the other diagonal line of upper surface 40.

In this manner, selection unit 16 selects the data of points $P_{b1}$, $P_{b2}$, and $P_{b3}$ respectively corresponding to feature points $P_{a1}$, $P_{a2}$, and $P_{a3}$ in feature region 30. Feature points $P_{a1}$, $P_{a2}$, and $P_{a3}$ are the positions that do not overlap with the positions of electronic components 41. Therefore, points $P_{b1}$, $P_{b2}$, and $P_{b3}$ are points on upper surface 40 which is the surface element.

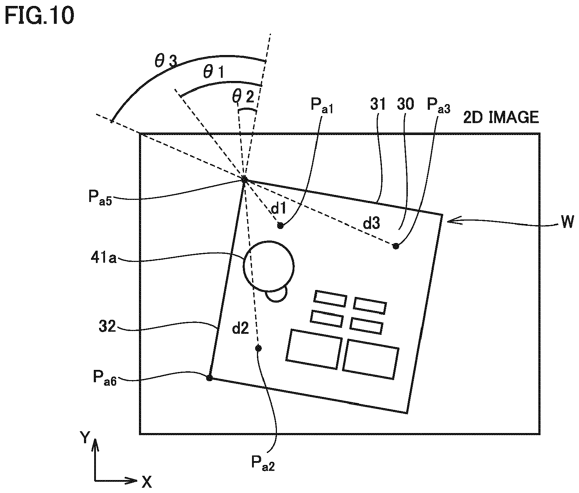

Fig. 10 is a diagram illustrating the fourth processing example when workpiece W is inclined. As illustrated in Fig. 10, even if workpiece W is inclined, selection unit 16 can select feature points $P_{a1}$, $P_{a2}$, and $P_{a3}$ that do not overlap electronic components 41 in consideration of the orientation of feature region 30.

Position and orientation determination unit 17 determines a plane including the surface element in accordance with the prior information indicating that the surface element is a plane, similarly to the first processing example.

Furthermore, position and orientation determination unit 17 determines a midpoint $P_{b4}$ between point $P_{b2}$ and point $P_{b3}$ as the center of the surface element on the determined plane. Similarly to the first processing example, position and orientation determination unit 17 determines the normal vectors (a, b, c) of the surface element.

Further, position and orientation determination unit 17 determines a vector $P_{b2}P_{b3}$ directed from point $P_{b2}$ to point $P_{b3}$ and a vector $P_{b1}P_{b4}$ directed from point $P_{b1}$ to midpoint $P_{b4}$ of the surface element as directions of two diagonals of the surface element. The directions of the diagonals indicate the orientation of the surface element in a rectangular shape.

In this manner, position and orientation determination unit 17 generates information indicating the center of the surface element, the normal vector of the surface element, and the directions of the two diagonals, as the position and orientation information indicating the position and the orientation of the surface element which is a rectangular plane.

When there is a possibility that upper surface 40 of workpiece W is inclined with respect to a horizontal plane in the tray, upper surface 40 in a rectangular shape looks like a distorted quadrangle obtained by projective transformation in the two-dimensional image. In this case, a rotation angle of a roll and a pitch of workpiece W can be recognized by template matching in consideration of the projective transformation. By appropriately correcting prescribed distances d1, d2, and d3 and prescribed angles $\theta1$, $\theta2$, and $\theta3$ according to the rotation angle, selection unit 16 can select data of a point on upper surface 40 at a position not overlapping with the position of electronic component 41 from the three-dimensional point cloud data. As described above, even when upper surface 40 of workpiece W is inclined with respect to the horizontal plane in the tray, image processing device 100 can determine the position and the orientation of upper surface 40.

(C-5. Fifth processing example)

The surface element is not limited to a flat surface, and may be a curved surface having a constant curvature, for example. A fifth processing example is an example of determining the position and the orientation of a spherical surface (surface element) of workpiece W in a spherical shape. In this example, storage unit 11 stores templates 11a when workpiece W is viewed from a certain viewpoint, and prior information 11b indicating that the surface element is a spherical surface with a radius r. Templates 11a indicate positions of edge pixels serving as a ridge line of the spherical surface when workpiece W is viewed from a certain viewpoint.

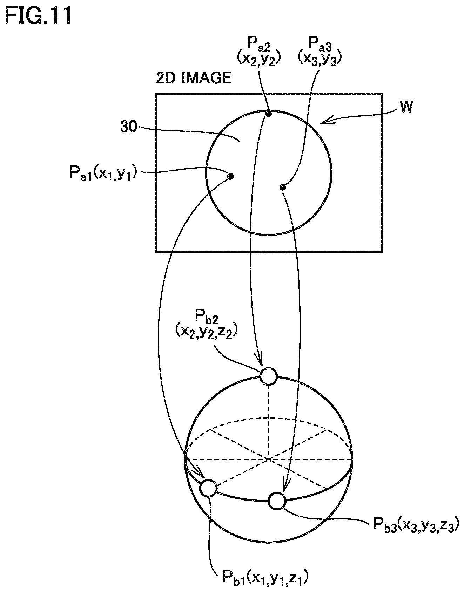

Fig. 11 is a diagram illustrating the fifth processing example by the image processing unit. As illustrated in Fig. 11, feature region detection unit 15 extracts edge pixels 31 in the two-dimensional image. Feature region detection unit 15 collates edge pixels 31 extracted from the two-dimensional image with templates 11a to detect feature region 30 included in the spherical surface of workpiece W from the two-dimensional image.

Selection unit 16 selects, from the three-dimensional point cloud data, data of three points $P_{b1}$, $P_{b2}$, and $P_{b3}$ belonging to feature region 30 when projected onto the two-dimensional image. Specifically, selection unit 16 selects, from the three-dimensional point cloud data, the data of points $P_{b1}$, $P_{b2}$, and $P_{b3}$ respectively corresponding to feature points $P_{a1}$, $P_{a2}$, and $P_{a3}$ in feature region 30.

Position and orientation determination unit 17 determines the position and the orientation of the surface element in accordance with the prior information indicating that the surface element is a spherical surface having a radius r. An equation indicating the spherical surface is expressed by:

$$x^2 + y^2 + z^2 + ax + by + cz + d = 0.$$

Here, coefficients a, b, c, and d and radius r satisfy Equation (1) listed below.

$$a^2 + b^2 + c^2 - 4d = 4r^2 \text{ ... Equation (1)}.$$

Position and orientation determination unit 17 calculates coefficients a, b, c, and d by solving simultaneous equations including Equation (1) listed above and Equations (2) to (4) listed below in which coordinates of point $P_{b1}$ ($x_1$, $y_1$, $z_1$), point $P_{b2}$ ($x_2$, $y_2$, $z_2$), and point $P_{b3}$ ($x_3$, $y_3$, $z_3$) are substituted into the above equations, respectively.

$$x_1^2 + y_1^2 + z_1^2 + ax_1 + by_1 + cz_1 + d = 0 \text{ ... Equation (2)}$$

$$x_2^2 + y_2^2 + z_2^2 + ax_2 + by_2 + cz_2 + d = 0 \text{ ... Equation (3)}$$

$$x_3^2 + y_3^2 + z_3^2 + ax_3 + by_3 + cz_3 + d = 0 \text{ ... Equation (4)}.$$

In this manner, position and orientation determination unit 17 generates the position and orientation information indicating the equations of the spherical surface which is the surface element.

Position and orientation determination unit 17 determines, for example, an uppermost point of the spherical surface indicated by the position and orientation information as the target point. Position and orientation determination unit 17 may determine a vector directed from the center point (-a/2, -b/2, -c/2) of the spherical surface, which is calculated from the equations of the spherical surface indicated by the position and orientation information, toward the target point as the normal vector at the target point.

When radius r of workpiece W is not known (when radius r is not included in prior information 11b), selection unit 16 may select four points that belong to feature region 30 when projected on the two-dimensional image. Position and orientation determination unit 17 can calculate coefficients a, b, c, and d by solving four simultaneous equations in which the coordinates of the four points are substituted.

(C-6. Other processing examples)

In the above example, feature region detection unit 15 detects the feature region from the two-dimensional image based on the edge pixels serving as the outline or the ridge line of the surface element. However, in a case where a feature portion exists in the surface element, feature region detection unit 15 may detect the feature region included in the surface element from the two-dimensional image based on the feature portion.

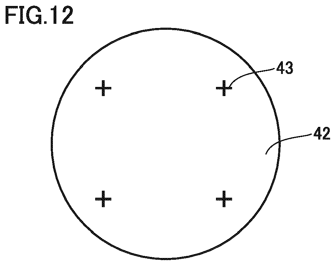

Fig. 12 is a view illustrating an example of a feature portion on the surface element. In the example illustrated in Fig. 12, four marks 43 are printed as feature portions on a bottom surface (surface element) 42 of workpiece W in a cylindrical shape. Feature region detection unit 15 may detect four marks 43 on the surface element using templates 11a and may detect a rectangle having four marks 43 as vertices as the feature region.

Examples of the feature portions include, in addition to the printed marks, printed characters, parts such as screws, recesses or protrusions, and the like.

Further, the surface element having a constant curvature may be a side surface of a cylinder in addition to the spherical surface of the fifth processing example. A length of a perpendicular line of points on the side surface of the cylinder to an axis of the cylinder is equal to radius r. An equation of a straight line (axis) in a three-dimensional space is expressed by:

$(x - xo)/a = (y - yo)/b = (z - zo)/c$. Therefore, when radius r is known (when radius r is included in prior information 11b), selection unit 16 may select six points associated with the feature region included in the surface element (the side surface of the cylinder) from the three-dimensional point cloud data. As a result, position and orientation determination unit 17 can calculate a, b, c, $x_0$, $y_0$, and $z_0$ of the above equations.

The surface element is not limited to a flat surface, a spherical surface, or a side surface of a cylinder, and may have any shape. In this case, in image processing device 100, model data of the surface element is registered in advance as the prior information. Position and orientation determination unit 17 may specify the position and the orientation of the surface element by matching the registered model data with data of a point selected by selection unit 16.

<D. Flow of processing>

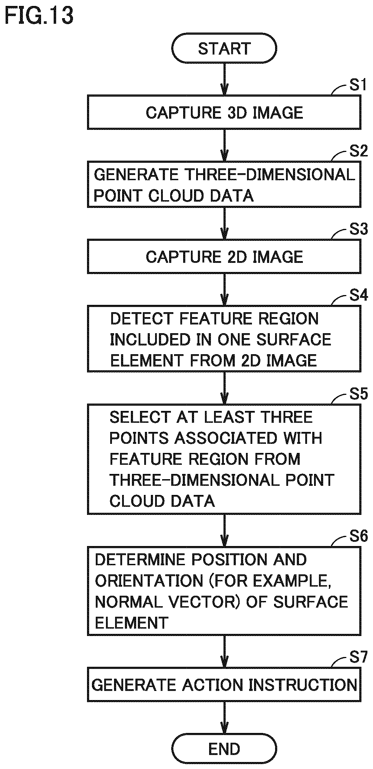

Fig. 13 is a flowchart illustrating a flow of processing in the control system. First, imaging device 8 images the visual field area in a state in which illumination light of a predetermined grayscale pattern is emitted (three-dimensional imaging mode) (step S1). CPU 110 of image processing device 100 generates three-dimensional point cloud data indicating x, y, and x coordinate values of points on an object surface existing in the visual field area of imaging device 8 based on the image obtained in step S1 (step S2).

Next, imaging device 8 images the visual field area in a state where the illumination light of the grayscale pattern is not irradiated (two-dimensional imaging mode) (step S3). CPU 110 detects a feature region included in the surface element of workpiece W from the two-dimensional image obtained in step S2 (step S4).

CPU 110 selects data of at least three points associated with the feature region from the three-dimensional point cloud data generated in step S2 (step S5).

CPU 110 determines a position and an orientation of the surface element (for example, a target point on the surface element and a normal vector to the element at the target point) based on the data of the selected at least three points and prior information 11b indicating the shape of the surface element (step S6).

CPU 110 generates an action instruction for robot 300 based on the position and the orientation of the surface element (step S7). Robot controller 200 controls an operation of the robot according to the action instruction that has been generated. With this, the processing of control system SYS ends.

<E. Action and effects>

As described above, image processing device 100 according to the present embodiment detects the position and the orientation of workpiece W. Image processing device 100 includes feature region detection unit 15, selection unit 16, and position and orientation determination unit 17. Feature region detection unit 15 detects a feature region included in a single surface element constituting the surface of workpiece W from a two-dimensional image obtained by imaging of workpiece W. Selection unit 16 selects data of at least three points associated with the feature region from the three-dimensional point cloud data obtained by three-dimensionally measuring workpiece W. Position and orientation determination unit 17 determines position and orientation information regarding the position and the orientation of the surface element by using the data of the at least three points and prior information 11b regarding the shape of the surface element.

The detection of the feature region from the two-dimensional image is performed by template matching using a two-dimensional template, for example. The number of templates to be prepared for two-dimensional template matching is smaller than the number of templates to be prepared for three-dimensional template matching. Therefore, processing time required for matching can be suppressed.

Further, the position and the orientation of the surface element that specifies a position and an orientation of a workpiece W are determined based on at least three points selected from the three-dimensional point cloud data. The at least three points are points associated with the feature region detected from the two-dimensional image. Therefore, time required to select the data of the at least three points from the three-dimensional point cloud data is short. An increase in the detection time of the position and the orientation of workpiece W can be suppressed.

Furthermore, for detection of the feature region from the two-dimensional image, a pattern formed on the surface element corresponding to the feature region, an edge that is a boundary between the surface element and a periphery of the surface element, and the like can be used. Therefore, even if workpiece W is in a shape with few three-dimensional features (for example, a thin plate), the feature region can be accurately detected from the two-dimensional image.

The data of the at least three points includes data of at least one first point whose relative position with respect to the feature region satisfies a predetermined condition.

As a result, the at least one first point whose relative position with respect to the feature region satisfies the predetermined condition can be used to specify the position of the surface element.

For example, Conditions (1), (3), (7), (8), and (10) described above are conditions that define a distance between a point obtained by projecting the at least one first point onto the feature region and a representative point representing the position of the feature region. Examples of the representative point include a gravity center, a corner, a midpoint of a side, or the like of the feature region. With this, the at least one first point can be utilized to identify the position of the surface element.

Condition (11) described above is a condition that defines an angle formed by a straight line passing through the at least one first point and the representative point and a representative direction representing the orientation of the feature region. The representative direction is, for example, a direction of a side of the feature region in a rectangular shape. As a result, a point can be selected from the three-dimensional point cloud data in consideration of the orientation of the feature region.

The data of the at least three points includes data of at least one second point in addition to the data of the at least one first point. In Condition (5) described above, the distance between the at least one second point and the at least one first point is within a defined range. As a result, the second point can be selected from the three-dimensional point cloud data based on the at least one first point whose relative position with respect to the feature region satisfies the predetermined condition.

By selecting according to the above Conditions (2) and (9), the data of at least three points is data of points belonging to the feature region when each point indicated by the three-dimensional point cloud data is projected on the two-dimensional image. As a result, it is possible to easily select data of a point included in the surface element from the three-dimensional point cloud data.

Feature region detection unit 15 detects the feature region using at least one of the feature portions present in the surface element and the contour of the surface element in the two-dimensional image. As a result, feature region detection unit 15 can easily detect the feature region using a known technique such as template matching.

The surface element is a flat surface or a curved surface having a constant curvature. As a result, the surface element is represented by the equations in the three-dimensional space. Therefore, position and orientation determination unit 17 can determine the position and the orientation of the surface element by obtaining the coefficient included in the equation.

The two-dimensional image is obtained by imaging by imaging device 8 in a state where the pattern light is not emitted. The three-dimensional point cloud data is generated from an image obtained by imaging by imaging device 8 in a state where the pattern light is emitted. As a result, the x and y coordinate values of an arbitrary one point in the two-dimensional image in the visual field area of imaging device 8 respectively coincide with the x and y coordinate values of the data of the one point in the three-dimensional point cloud data. Therefore, selection unit 16 can easily select the data of the at least three points associated with the feature region from the three-dimensional point cloud data.

The position and orientation information may indicate a normal vector at one point in the surface element. As a result, for example, the normal vector can be used to instruct the operation of the robot that picks workpiece W.

Image processing device 100 further includes an action instruction generation unit 18 configured to generate an action instruction based on the normal vector, the action instruction being for a robot that picks the workpiece W. As a result, the robot can perform a picking operation according to the position and the orientation of workpiece W.

<F. Modifications>

In the above description, illumination device 7, imaging device 8, and image processing device 100 are configured as separate components. However, illumination device 7, imaging device 8, and image processing device 100 may be integrated as a visual sensor device. In this case, illumination device 7 and imaging device 8 operate respectively as an illumination unit and an imaging unit in the visual sensor device.

Further, in the above description, action instruction generation unit 18 is included in image processing device 100. However, action instruction generation unit 18 may be provided in a device (for example, a programmable logic controller (PLC)) outside image processing device 100.

<G. Appendix>

As described above, the present exemplary embodiment and modifications include the following disclosure.

(Configuration 1)

A device (100) for detecting a position and an orientation of a target object (W), the device comprising:

a detection unit (15) configured to detect a feature region from a two-dimensional image obtained by imaging a target object, the feature region being included in a single surface element constituting a surface of target object (W);
a selection unit (16) configured to select data of at least three points from three-dimensional point cloud data obtained by three-dimensionally measuring target object (W), the data of the at least three points being associated with the feature region; and

a position and orientation determination unit (17) configured to determine position and orientation information by using the data of the at least three points and prior information regarding a shape of the surface element, the position and orientation information being related to a position and an orientation of the surface element.

(Configuration 2)

Device (100) according to configuration 1, wherein the data of the at least three points includes data of at least one first point, a relative position of the at least one first point with respect to the feature region satisfying a predetermined condition.

(Configuration 3)

Device (100) according to configuration 2, wherein the predetermined condition is a condition that defines a distance between a point obtained by projecting the at least one first point on the feature region and a representative point representing a position of the feature region.

(Configuration 4)

Device (100) according to configuration 3, wherein the predetermined condition is a condition that defines an angle between a straight line passing through the point obtained by projecting the at least one first point on the feature region and the representative point, and a representative direction representing an orientation of the feature region.

(Configuration 5)

Device (100) according to any one of configurations 2 to 4, wherein the data of the at least three points includes data of at least one second point in addition to the data of the at least one first point, and

a distance between the at least one second point and the at least one first point is within a defined range.

(Configuration 6)

Device (100) according to the configuration 1, wherein the data of the at least three points is data of points belonging to the feature region when each of the points expressed by the three-dimensional point cloud data is projected on the two-dimensional image.

(Configuration 7)

Device (100) according to any one of configurations 1 to 6, wherein detection unit (15) detects the feature region using at least one of a feature portion existing in the surface element and a contour of the surface element in the two-dimensional image.

(Configuration 8)

Device (100) according to any one of the configurations 1 to 7, wherein the surface element is a flat surface or a curved surface having a constant curvature.

(Configuration 9)

Device (100) according to any one of configurations 1 to 8, further comprising:

an imaging unit (8) configured to image the target object; and
an irradiation unit (7) configured to irradiate the target object with predetermined pattern light, wherein
the two-dimensional image is obtained by imaging by the imaging unit (8) in a state where the pattern light is not emitted, and
the three-dimensional point cloud data is generated from an image obtained by imaging by the imaging unit in a state where the pattern light is emitted.

(Configuration 10)

Device (100) according to any one of configurations 1 to 9, wherein the position and orientation information indicates a normal vector at one point in the surface element.

(Configuration 11)

Device (100) according to configuration 10, further comprising an action instruction generation unit (19) configured to generate an action instruction based on the normal vector, the action instruction being for a robot that picks the target object.

(Configuration 12)

A method for detecting a position and an orientation of a target object (W), the method comprising:

detecting a feature region from a two-dimensional image obtained by imaging a target object (W), the feature region being included in a single surface element constituting a surface of target object (W);
selecting data of at least three points from three-dimensional point cloud data obtained by three-dimensionally measuring target object (W), the data of the at least three points being associated with the feature region; and
determining position and orientation information by using the data of the at least three points and prior information regarding a shape of the surface element, the position and orientation information being related to a position and an orientation of the surface element.

(Configuration 13)

A program for causing a computer to execute a method for detecting a position and an orientation of a target object (W), wherein
the method comprises:

detecting a feature region from a two-dimensional image obtained by imaging a target object (W), the feature region being included in a single surface element constituting a surface of target object (W);
selecting data of at least three points from three-dimensional point cloud data obtained by three-dimensionally measuring target object (W), the data of the at least three points being associated with the feature region; and
determining position and orientation information by using the data of the at least three points and prior information regarding a shape of the surface element, the position and orientation information being related to a position and an orientation of the surface element.

Although the embodiment of the present invention has been described, it should be considered that the embodiment disclosed herein is illustrative in all respects and not restrictive. The scope of the present invention is defined by the claims, and it is intended that meanings equivalent to the claims and all modifications within the scope are included.

REFERENCE SIGNS LIST

7: illumination device, 8: imaging device, 10: imaging control unit, 11: storage unit, 11a: template, 11b: prior information, 12: image processing unit, 13: image acquisition unit, 14: image generation unit, 15: feature region detection unit, 16: selection unit, 17: position and orientation determination unit, 18: action instruction generation unit, 19: communication unit, 30: feature region, 31: edge pixel, 32: side, 40: upper surface, 41, 41a: electronic component, 42: bottom surface, 43: mark, 100: image processing device, 102: display, 104: mouse, 106: memory card, 110: CPU, 112: main memory, 114: hard disk, 116: camera interface, 116a: image buffer, 118: input interface, 120: display controller, 122: projector interface, 124: communication interface, 126: data reader/writer, 128: bus, 200: robot controller, 300: robot, SYS: control system, W: workpiece

**Claims**

1. A device for detecting a position and an orientation of a target object, the device comprising:

a detection unit configured to detect a feature region from a two-dimensional image obtained by imaging a target object, the feature region being included in a single surface element constituting a surface of the target object;
a selection unit configured to select data of at least three points from three-dimensional point cloud data obtained by three-dimensionally measuring the target object, the data of the at least three points being associated with the feature region; and
a position and orientation determination unit configured to determine position and orientation information by using the data of the at least three points and prior information regarding a shape of the surface element, the position and orientation information being related to a position and an orientation of the surface element.

2. The device according to claim 1, wherein the data of the at least three points includes data of at least one first point, a relative position of the at least one first point with respect to the feature region satisfying a predetermined condition.

3. The device according to claim 2, wherein the predetermined condition is a condition that defines a distance between a point obtained by projecting the at least one first point on the feature region and a representative point representing a position of the feature region.

4. The device according to claim 3, wherein the predetermined condition is a condition that defines an angle between a straight line passing through the point obtained by projecting the at least one first point on the feature region and the representative point, and a representative direction representing an orientation of the feature region.

5. The device according to any one of claims 2 to 4, wherein

the data of the at least three points includes data of at least one second point in addition to the data of the at least one first point, and
a distance between the at least one second point and the at least one first point is within a defined range.

6. The device according to claim 1, wherein the data of the at least three points is data of points belonging to the feature region when each of the points expressed by the three-dimensional point cloud data is projected on the two-dimensional image.

7. The device according to any one of claims 1 to 6, wherein the detection unit detects the feature region using at least one of a feature portion existing in the surface element and a contour of the surface element in the two-dimensional image.

8. The device according to any one of claims 1 to 7, wherein the surface element is a flat surface or a curved surface having a constant curvature.

9. The device according to any one of claims 1 to 8, further comprising:

an imaging unit configured to image the target object; and
an irradiation unit configured to irradiate the target object with predetermined pattern light,
wherein the two-dimensional image is obtained by imaging by the imaging unit in a state where the pattern light is not emitted, and
the three-dimensional point cloud data is generated from an image obtained by imaging by the imaging unit in a state where the pattern light is emitted.

10. The device according to any one of claims 1 to 9, wherein the position and orientation information indicates a normal vector at one point in the surface element.

11. The device according to claim 10, further comprising:
an action instruction generation unit configured to generate an action instruction based on the normal vector, the action instruction being for a robot that picks the target object.

12. A method for detecting a position and an orientation of a target object, the method comprising:

detecting a feature region from a two-dimensional image obtained by imaging a target object, the feature region being included in a single surface element constituting a surface of the target object;
selecting data of at least three points from three-dimensional point cloud data obtained by three-dimensionally measuring the target object, the data of the at least three points being associated with the feature region; and

determining position and orientation information by using the data of the at least three points and prior information regarding a shape of the surface element, the position and orientation information being related to a position and an orientation of the surface element.

13. A program for causing a computer to execute a method for detecting a position and an orientation of a target object, wherein
the method comprises:

detecting a feature region from a two-dimensional image obtained by imaging a target object, the feature region being included in a single surface element constituting a surface of the target object;
selecting data of at least three points from three-dimensional point cloud data obtained by three-dimensionally measuring the target object, the data of the at least three points being associated with the feature region; and
determining position and orientation information by using the data of the at least three points and prior information regarding a shape of the surface element, the position and orientation information being related to a position and an orientation of the surface element.

FIG.1

SYS

FIG.2

W

DISTANCE IMAGE

Y

X

FIG.3

```
                                                                    ⌐8

                                          ⌐100

  ⌐110        ⌐112              ⌐116              ⌐114

┌─────────┐  ┌─────────┐    ┌─────────┐       ┌─────────┐
│         │  │  MAIN   │    │  IMAGE  │        │  HARD   │
│   CPU   │  │ MEMORY  │    │ BUFFER  │ ─116a  │  DISK   │
└─────────┘  └─────────┘    └─────────┘       └─────────┘

                                                   128

  ⌐118        ⌐120          ⌐122      ⌐124      ⌐126

┌─────────┐  ┌──────────┐ ┌──────────┐ ┌────────────┐ ┌─────────┐
│  INPUT  │  │ DISPLAY  │ │PROJECTOR │ │COMMUNICATION│ │  DATA   │
│INTERFACE│  │CONTROLLER│ │INTERFACE │ │ INTERFACE   │ │READER/  │
│         │  │          │ │          │ │             │ │WRITER   │
└─────────┘  └──────────┘ └──────────┘ └────────────┘ └─────────┘

   ⌐104       ⌐102          ⌐7                             ⌐106

┌─────────┐  ╭─────────╮ ┌────────────┐                 ┌─────────┐
│  MOUSE  │  │ DISPLAY │ │ILLUMINATION│   ROBOT         │ MEMORY  │
│         │  ╰─────────╯ │ DEVICE     │   CONTROLLER    │ CARD    │
└─────────┘              └────────────┘   AND THE LIKE  └─────────┘
```

FIG.4

```
┌─────────────┐  8
│ IMAGING     │
│ DEVICE      │
└─────────────┘
                    ┌──────────────────────────────────────────────────────────────┐ 100
                    │ IMAGE PROCESSING DEVICE                                        │
                    │                                              11                │
                    │  ┌──────────────────────┐ 10   ┌──────────────────────────┐   │
┌─────────────┐  7  │  │ IMAGING CONTROL UNIT │      │    STORAGE UNIT          │   │
│ ILLUMINATION│     │  └──────────────────────┘      │                    11a   │   │
│ DEVICE      │     │                                │  ┌────────────────────┐  │   │
└─────────────┘     │                                │  │    TEMPLATE        │  │   │
                    │                                │  └────────────────────┘  │   │
                    │                                │                    11b   │   │
                    │                                │  ┌────────────────────┐  │   │
                    │                                │  │ PRIOR              │  │   │
                    │                                │  │ INFORMATION        │  │   │
                    │                                │  └────────────────────┘  │   │
                    │                                └──────────────────────────┘   │
                    │  ┌─ ─ ─ ─ ─ ─ ─ ─ ─ ─ ─ ─ ─ ─ ─ ─ ─ ─ ─ ─ ─ ─ ─ 12 ─ ┐      │
                    │  │ IMAGE PROCESSING UNIT                              │      │
                    │  │  ┌──────────────────┐ 13   ┌──────────────────┐ 14 │      │
                    │  │  │ 2D IMAGE         │      │ 3D IMAGE         │    │      │
                    │  │  │ ACQUISITION UNIT │      │ GENERATION UNIT  │    │      │
                    │  │  └──────────────────┘      └──────────────────┘    │      │
                    │  │  ┌──────────────────┐ 15   ┌──────────────────┐ 16 │      │
                    │  │  │ FEATURE REGION   │      │ SELECTION UNIT   │    │      │
                    │  │  │ DETECTION UNIT   │      └──────────────────┘    │      │
                    │  │  └──────────────────┘                             │      │
                    │  │  ┌──────────────────┐ 17   ┌──────────────────┐ 18 │      │
                    │  │  │ POSITION AND     │      │ ACTION INSTRUCTION│    │      │
                    │  │  │ ORIENTATION      │      │ GENERATION UNIT   │    │      │
                    │  │  │ DETERMINATION    │      └──────────────────┘    │      │
                    │  │  │ UNIT             │                             │      │
                    │  │  └──────────────────┘      ┌──────────────────┐ 19 │      │
                    │  │                            │COMMUNICATION UNIT │    │      │
                    │  │                            └──────────────────┘    │      │
                    │  └ ─ ─ ─ ─ ─ ─ ─ ─ ─ ─ ─ ─ ─ ─ ─ ─ ─ ─ ─ ─ ─ ─ ─ ─ ┘      │
                    └──────────────────────────────────────────────────────────────┘
                                                    ┌──────────────────────┐ 200
                                                    │ ROBOT CONTROLLER     │
                                                    └──────────────────────┘
```

FIG.5

FIG.6

NORMAL VECTOR

$P_{b3}(x_3, y_3, z_3)$

$P_{b1}(x_1, y_1, z_1)$

$P_{b2}(x_2, y_2, z_2)$

# FIG.7

2D IMAGE  31

DISTANCE IMAGE

$P_{b3}(x_3, y_3, z_3)$

$P_{b2}(x_2, y_2, z_2)$

$P_{b1}(x_1, y_1, z_1)$

30  W

$P_{a1}(x_1, y_1)$

FIG.8

2D IMAGE 30   $P_{a3}(x_3,y_3)$   DISTANCE IMAGE

$P_{b3}(x_3,y_3,z_3)$

$P_{b1}(x_1,y_1,z_1)$

$P_{b2}(x_2,y_2,z_2)$

W   $P_{a1}$   $P_{a2}$   W
    $(x_1,y_1)$   $(x_2,y_2)$

FIG.9

FIG.10

# FIG.11

2D IMAGE

$P_{a2}$
$(x_2,y_2)$

$P_{a3}$
$(x_3,y_3)$

30

W

$P_{a1}(x_1,y_1)$

$P_{b2}$
$(x_2,y_2,z_2)$

$P_{b3}(x_3,y_3,z_3)$

$P_{b1}(x_1,y_1,z_1)$

FIG.12

## FIG.13

```
              ┌─────────────┐
              │    START    │
              └──────┬──────┘
                     │              ╭─S1
        ┌────────────▼────────────┐
        │     CAPTURE 3D IMAGE     │
        └────────────┬────────────┘
                     │              ╭─S2
        ┌────────────▼────────────┐
        │ GENERATE THREE-DIMENSIONAL│
        │      POINT CLOUD DATA     │
        └────────────┬────────────┘
                     │              ╭─S3
        ┌────────────▼────────────┐
        │     CAPTURE 2D IMAGE     │
        └────────────┬────────────┘
                     │              ╭─S4
        ┌────────────▼────────────┐
        │    DETECT FEATURE REGION │
        │    INCLUDED IN ONE SURFACE│
        │    ELEMENT FROM 2D IMAGE │
        └────────────┬────────────┘
                     │              ╭─S5
        ┌────────────▼────────────┐
        │   SELECT AT LEAST THREE  │
        │   POINTS ASSOCIATED WITH │
        │   FEATURE REGION FROM     │
        │   THREE-DIMENSIONAL POINT │
        │   CLOUD DATA              │
        └────────────┬────────────┘
                     │              ╭─S6
        ┌────────────▼────────────┐
        │ DETERMINE POSITION AND   │
        │ ORIENTATION (FOR EXAMPLE,│
        │ NORMAL VECTOR) OF SURFACE │
        │ ELEMENT                  │
        └────────────┬────────────┘
                     │              ╭─S7
        ┌────────────▼────────────┐
        │ GENERATE ACTION INSTRUCTION│
        └────────────┬────────────┘
                     │
              ┌──────▼──────┐
              │     END     │
              └─────────────┘
```

**INTERNATIONAL SEARCH REPORT**

| International application No. |
| --- |
| PCT/JP2020/014781 |

A.   CLASSIFICATION OF SUBJECT MATTER
Int.Cl. G01B11/00(2006.01)i, G01B11/26(2006.01)i, G06T7/73(2017.01)i
FI: G01B11/00H, G01B11/26H, G06T7/73

According to International Patent Classification (IPC) or to both national classification and IPC

B.   FIELDS SEARCHED

Minimum documentation searched (classification system followed by classification symbols)
Int.Cl. G01B11/00, G01B11/26, G06T7/73

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 2012-128661 A (CANON INC.) 05.07.2012 (2012-07-05) | 1-13 |
| A | JP 2015-114762 A (UNIV OF TSUKUBA) 22.06.2015 (2015-06-22) | 1-13 |
| A | JP 2015-135333 A (CANON INC.) 27.07.2015 (2015-07-27) | 1-13 |

☐   Further documents are listed in the continuation of Box C.      ☒   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09.06.2020 | 23.06.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2020/014781 |

| | | |
|---|---|---|
| JP 2012-128661 A | 05.07.2012 | US 2013/0272578 A1 |
| JP 2015-114762 A | 22.06.2015 | (Family: none) |
| JP 2015-135333 A | 27.07.2015 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017042897 A